# EUROPÄISCHE PATENTSCHRIFT

(11) **EP 3 775 701 B1**
(45) Veröffentlichungstag und Bekanntmachung des Hinweises auf die Patenterteilung: **09.10.2024**
(21) Anmeldenummer: 19708551.7
(22) Anmeldetag: 07.03.2019
(51) Int. Cl.: D06F 39/40, D06F 58/20, F24C 15/32, F24C 15/00, A47J 27/21, D06F 75/10

(54) **HAUSHALTS-DAMPFBEHANDLUNGSGERÄT**
DOMESTIC STEAM TREATMENT APPLIANCE
APPAREIL MÉNAGER DE TRAITEMENT À LA VAPEUR

(30) Priorität: 29.03.2018 EP 18290027
(43) Veröffentlichungstag der Anmeldung: 17.02.2021
(73) Patentinhaber: BSH Hausgeräte GmbH, 81739 München (DE)
(72) Erfinder: ALBRECHT, Arnaud, 67100 Strasbourg (FR); CHABUT, Nicolas, 67140 Gertwiller (FR)
(86) Internationale Anmeldenummer: PCT/EP2019/055657
(87) Internationale Veröffentlichungsnummer: WO 2019/185321

(56) Entgegenhaltungen:
- EP-A1- 2 461 107
- EP-A1- 3 088 800
- EP-A1- 3 278 691
- EP-A2- 2 048 444
- DE-A1- 102010 002 438

## Beschreibung

Die Erfindung betrifft ein Haushalts-Dampfbehandlungsgerät, aufweisend einen Dampferzeuger, wobei der Dampferzeuger einen Wassertank zur Aufnahme von zu verdampfenden Wasser, mindestens ein außerhalb des Wassertanks angeordnetes Heizelement und einen Temperatursensor aufweist, wobei das Haushalts-Dampferzeugungsgerät eine Datenverarbeitungseinrichtung aufweist, welche mit dem mindestens einen Temperatursensor gekoppelt ist und die Datenverarbeitungseinrichtung zu eingerichtet ist, einen Verkalkungsgrad des Wassertanks anhand einer durch den mindestens einen Temperatursensor gemessenen Temperatur festzustellen. Die Erfindung betrifft auch ein Verfahren zum Betreiben eines solchen Haushalts-Dampfbehandlungsgeräts. Die Erfindung ist insbesondere vorteilhaft anwendbar auf Dampfgargeräte, z.B. eigenständige Dampfgargeräte oder Gargeräte mit Dampfgarfunktion.

EP 1 166 698 A1 offenbart einen Boiler, insbesondere für ein Dampfgargerät, das einen Wassertemperatursensor zum Messen der Wassertemperatur und einen Heiztemperatursensor zum Messen der Temperatur einer in einem Wassertank angeordneten Heizung besitzt. Eine große Differenz zwischen den von den beiden Sensoren gemessenen Temperaturen oder eine hohe Temperatur des Heiztemperatursensors zeigt einer Kalk-Messeinheit an, dass eine Entkalkung durchgeführt werden muss.

US 4,214,148 offenbart, dass eine Verkalkung, die ausreicht, um eine Materialverschlechterung einer Wärmeübertragung zu verursachen, in einem Wasser-Durchlauferhitzer in einem elektrischen Gerät, wie einer Kaffeemaschine, angezeigt. Der Wasser-Durchlauferhitzer weist einen ersten und einen zweiten temperaturabhängigen Schalter auf, die thermisch mit einem wasserführenden Metallrohr des Wasser-Durchlauferhitzers gekoppelt sind. Der erste Schalter dient als Endschalter oder zur Temperaturregelung. Eine Schalttemperatur des zweiten Schalters liegt unterhalb derjenigen des ersten Schalters im Bereich von Temperaturen, die im Wasserheizbetrieb auftreten, wenn eine übermäßige Verkalkung vorliegt. Ein Zeitverzögerungsglied betätigt nach einer vorbestimmten Zeit ein Anzeigesignal. Das Zeitverzögerungsglied ist in Betrieb, wenn sich nur der zweite temperaturabhängige Schalter in einem Ansprechzustand befindet.

DE 10 2015 207 253 A1 offenbart eine Heizeinrichtung zum Verdampfen von Flüssigkeiten für ein Elektrogargerät mit einem Behälter für die Flüssigkeit, der höher ist als breit, wobei außen an einer seitlichen Behälterwand Heizelemente flächig verteilt sind und mehrere Temperatursensoren vorgesehen sind. Es sind mindestens drei separate und separat betreibbare Heizkreise, wobei jeder Heizkreis mindestens ein Heizelement aufweist. Die mehreren Temperatursensoren sind in zwei Arten vorhanden, wobei eine erste Art diskrete Bauteile sind, die außen auf der Behälterwand aufgesetzt sind, und wobei eine zweite Art als flächige Beschichtung an der Außenseite der Behälterwand aufgebracht ist.

EP 3 088 800 A1 offenbart eine Heizeinrichtung zum Verdampfen von Flüssigkeiten für ein Elektrogargerät mit einem Behälter für die Flüssigkeit, der höher ist als breit, wobei außen an einer seitlichen Behälterwand Heizelemente flächig verteilt sind und mehrere Temperatursensoren vorgesehen sind. Es sind mindestens drei separate und separat betreibbare Heizkreise vorhanden, wobei jeder Heizkreis mindestens ein Heizelement aufweist. Die mehreren Temperatursensoren sind in zwei Arten vorhanden, wobei eine erste Art diskrete Bauteile sind, die außen auf der Behälterwand aufgesetzt sind, und wobei eine zweite Art als flächige Beschichtung an der Außenseite der Behälterwand aufgebracht ist.

Das Dokument EP 2 048 444 A2 offenbart ein Haushalts-Dampfbehandlungsgerät mit Dampferzeuger.

Es ist die **Aufgabe** der vorliegenden Erfindung, die Nachteile des Standes der Technik zumindest teilweise zu überwinden und insbesondere eine besonders zuverlässige und einfache Feststellung eines Verkalkungszustands oder Verkalkungsgrads eines Haushalts-Dampfbehandlungsgeräts der betreffenden Art bereitzustellen.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Die Aufgabe wird gelost durch ein Haushaits-Damptbehandiungsgerat, aufweisend die Merkmale des Anspruchs 1.

Dieses Haushalts-Dampfbehandlungsgerät weist den Vorteil auf, dass ein Verkalkungszustand des Wassertanks unter Verwendung eines konstruktiv einfachen und langlebigen Aufbaus besonders verlässlich nachweisbar ist. Dabei wird ausgenutzt, dass die Kalkschicht als Wärmeisolationsschicht wirkt, und das Heizelement wird mit fortschreitender Verkalkung - auch bei gleicher Heizleistung - eine höhere Temperatur annimmt. Diese durch die Verkalkung bewirkte Erhöhung der Heizelementtemperatur ist zumindest annähernd proportional zu einer von dem mindestens einen Heizelement auf den Wassertank übertragenen Energie. Somit lässt sich aus dem Temperaturunterschied zuverlässig auf die Dicke einer Kalkschicht an einer Innenseite des Wassertanks, die dem Heizelement gegenüberliegt, zurückschließen und damit auf den Verkalkungsgrad. Mittels des Haushalts-Dampfbehandlungsgerät ist die Heizelementtemperatur besonders genau messbar ist, da thermische Einflüsse anderer Komponenten des Haushalts-Dampfbehandlungsgeräts wie die einer thermischen Masse des Wassertanks und/oder des Wassers besonders gering sind.

Es ist eine Weiterbildung, dass das Haushalts-Dampfbehandlungsgerät ein Gargerät ist. Das Gargerät kann ein beispielsweise ein dedizierter Dampfgarer oder ein Gargerät mit zuschaltbarer Dampfbehandlungsfunktion sein. Ein Gargerät mit zuschaltbarer Dampfbehandlungsfunktion kann beispielsweise ein Backofen und/oder ein Mikrowellengerät mit zuschaltbarer Dampfbehandlungsfunktion sein. Das Gargerät kann jedoch auch ein reines Dampfbehandlungsgerät ohne Garunktion sein. Das Haushalts-Dampfbehandlungsgerät kann ferner ein Wäschepflegegerät sein.

Der Dampferzeuger kann in einer Weiterbildung außerhalb eines Behandlungsraums des Haushalts-Dampfbehandlungsgeräts angeordnet sein und mit geeigneten Zufuhreinrichtungen zur Einleitung des von dem Dampferzeuger erzeugten Dampfs (z.B. Stutzen, Rohren oder Schläuchen) in den Behandlungsraum verbunden sein. Der Dampferzeuger kann in einer anderen Weiterbildung innerhalb des Behandlungsraums angeordnet sein, dass sein Wassertank zu dem Behandlungsraum offen ist. Der Wassertank kann dann auch als "Wasserschale" bezeichnet werden. Das mindestens eine Heizelement befindet sich dann vorteilhafter Weise außerhalb des Behandlungsraums. Ein solcher zu dem Behandlungsraum offener oder geöffneter Wassertank kann beispielsweise bodenseitig in den Behandlungsraum eingelassen sein.

Der Wassertank kann ein fest in dem Haushalts-Dampfbehandlungsgerät untergebrachter Wassertank sein oder durch einen Nutzer zur Nachfüllung von Wasser und/oder zur Reinigung oder Entkalkung entnehmbar sein. Insbesondere ist in dem Wassertank stehendes Wasser durch das Heizelement zur Dampferzeugung erhitzbar. Diese Anordnung kann auch als "Boiler" bezeichnet werden.

Das mindestens eine Heizelement kann genau ein Heizelement oder mehrere Heizelemente umfassen. Insbesondere, falls genau ein Heizelement vorhanden ist, kann dieses mehrfach gekrümmt sein, beispielsweise U-förmig oder W-förmig verlaufen.

Das Haushalts-Dampfbehandlungsgerät kann zudem einen oder mehrere solche Heizelement-Temperatursensoren aufweisen. Jedoch ist es für eine einfache Ausgestaltung und Bestimmung des Verkalkungsgrad besonders vorteilhaft, wenn nur genau ein Heizelement-Temperatursensor vorhanden ist.

Dass das mindestens eine Heizelement außerhalb des Wassertanks angeordnet ist, umfasst insbesondere, dass das Heizelement in geringer Nähe zu dem Wassertank angeordnet ist. Das mindestens eine Heizelement kann den Wassertank kontaktieren oder von dem Wassertank beanstandet sein. Dabei ist zur effektiven Wärmeübertragung auf den Wassertank besonders vorteilhaft, wenn das mindestens eine Heizelement den Wassertank kontaktiert. Das Heizelement kann beispielsweise mit dem Wassertank verlötet sein. Es ist eine Weiterbildung, dass das mindestens eine Heizelement bodenseitig an dem Wassertank angeordnet ist, da so auch noch geringe Wassermengen energiesparend und effektiv verdampft werden können.

Das mindestens eine Heizelement ist insbesondere ein elektrisch betreibbares Widerstandsheizelement. Das mindestens eine Heizelement kann mittels einer Strom- oder Spannungsquelle mit einer vorgegebenen Heizleistung betrieben werden. Die Heizleistung kann beispielsweise durch mittels eines Konstantstroms oder getaktet in das mindestens eine Heizelement eingeprägt werden.

Es ist eine Weiterbildung, dass das Heizelement ein stab- oder rohrförmiges Heizelement ist. Das Heizelement kann aber auch in Form einer auf den Wassertank aufgebrachten, z.B. aufgedruckten, Heizleiterbahn vorliegen.

Der Heizelement-Temperatursensor dient zur indirekten Messung oder Abfühlung der Temperatur des Heizelements als solchem und ist dazu mit dem Heizelement indirekt thermisch gekoppelt. Der Heizelement-Temperatursensor dient also nicht zur Messung der Temperatur des Wassertanks oder des in dem Wassertank befindlichen Wassers. Der Heizelement-Temperatursensor kann grundsätzlich auch ein berührungslos messender Temperatursensor wie ein IR-Sensor sein. Der Heizelement-Temperatursensor kann z.B. ein Heißleiter, Kaltleiter, Halbleiter-Temperatursensor oder Thermoelement sein.

Die Datenverarbeitungseinrichtung kann aufgrund ihrer Kopplung mit dem Temperatursensor Messdaten des Heizelement-Temperatursensors empfangen und zur Bestimmung des Verkalkungsgrads verarbeiten bzw. auswerten.

Erfindungsgemäß ist das mindestens eine Heizelement an seiner dem Wassertank abgewandten Seite von einer metallischen Abdeckung abgedeckt und der Heizelement-Temperatursensor an der metallischen Abdeckung angebracht.

Dies ergibt den Vorteil, dass der Heizelement-Temperatursensor besonders einfach und zuverlässig anbringbar ist, da eine Formgebung der Abdeckung grundsätzlich frei wählbar ist. Insbesondere kann die Abdeckung dazu einen ebenen oder planen Bereich zur Befestigung des Heizelement-Temperatursensors aufweisen.

Darüber hinaus ergibt sich der Vorteil, dass durch die Abdeckung eine Temperatur des Heizelements flächig vergleichmäßigt wird und so besonders zuverlässig bestimmbar ist. Dies ist besonders vorteilhaft, wenn die Abdeckung mehrere unterschiedliche Abschnitte des Heizelements, die merklich unterschiedliche Temperaturen aufweisen können, überdeckt. Die unterschiedlichen Temperaturen können innerhalb eines Heizelements oder, bei Vorliegen mehrerer Heizelemente, zwischen unterschiedlichen Heizelementen auftreten.

Auch ergibt sich der Vorteil, dass durch die Abdeckung Temperaturspitzen vermieden werden, die zu einer Beschädigung der Befestigung des Heizelement-Temperatursensors führen könnten. Auch wird eine Schädigung des Heizelements bei sehr hohen Temperaturen aufgrund einer Reaktion mit einer Befestigung des Heizelement-Temperatursensors besonders zuverlässig vermieden. Ist beispielsweise der Heizelement-Temperatursensor mittels einer Lötverbindung befestigt, wird durch die Anbringung an der Abdeckung verhindert, dass bei hohen Temperaturen aus der Lötverbindung möglicherweise austretendes Flussmittel an das Heizelement gelangt und diesen schädigen kann.

Es ist eine Weiterbildung, dass dann, wenn die Abdeckung zwei Heizelementabschnitte abdeckt (insbesondere Heizelementabschnitte von zwei Heizelementen), der Heizelement-Temperatursensor auf der Abdeckung in der Mitte zwischen den beiden Heizelementen angeordnet ist, da so mittels der Abdeckung vorteilhafterweise mögliche Temperaturunterschiede der Heizelemente ausgeglichen werden können und die Heizelementtemperatur dadurch besonders zuverlässig bestimmbar ist.

Es ist eine Ausgestaltung, dass der Heizelement-Temperatursensor an der dem Wassertank abgewandten Seite der metallischen Abdeckung angebracht ist. So wird der Vorteil erreicht, dass der Heizelement-Temperatursensor besonders einfach anbringbar ist. Auch kann so eine korrekte Befestigung des Heizelement-Temperatursensors besonders einfach überprüft werden und der Heizelement-Temperatursensor bei Bedarf besonders einfach ausgetauscht werden.

Es ist eine Ausgestaltung, dass der Heizelement-Temperatursensor an der dem Wassertank abgewandten Seite der metallischen Abdeckung angebracht ist, also zwischen der Abdeckung und dem Wassertank. Dies ergibt den Vorteil, dass der Heizelement-Temperatursensor in einem besonders nahen Abstand zu dem Heizelement angeordnet ist.

Es ist eine Weiterbildung, dass die Abdeckung aus einem Metall mit einer besonders hohen Wärmeleitfähigkeit besteht, insbesondere mit einer Wärmeleitfähigkeit von mindestens 75 W/(m·K), insbesondere von mindestens 150 W/(m·K). Die Abdeckung kann beispielsweise aus Aluminium oder einer Aluminiumlegierung bestehen. Die Abdeckung kann in Form einer Metallplatte, insbesondere Aluminiumplatte, vorliegen.

Es ist eine Weiterbildung, dass die metallischen Abdeckung aus einem Metall besteht, das eine höhere Wärmeleitfähigkeit aufweist als die dem Heizelement gegenüberliegende Fläche des Wassertanks. So kann die Abdeckung aus Aluminium oder einer Aluminiumlegierung bestehen, während der Wassertank aus Edelstahl besteht. Dies erhöht eine Zuverlässigkeit der Bestimmung der Heizelementtemperatur weiter.

Die metallische Abdeckung kann in Kontakt mit dem mindestens einen Heizelement stehen oder in einer geringen Entfernung von (kontaktlos zu) dem mindestens einen Heizelement angeordnet sein. So kann die Abdeckung auf dem mindestens einen Heizelement aufgelötet oder mittels eines thermisch gut leitfähigen Haftmittels (z.B. eines wärmeleitfähigen Klebers oder einer wärmeleitfähigen Paste, TIM; "Thermal Interface Material") daran befestigt sein, oder die Abdeckung kann so angeschraubt sein, dass sie in ständigem Druckkontakt mit dem mindestens einen Heizelement steht.

An der metallischen Abdeckung kann auch ein Protektor angebracht sein kann, was den Vorteil ergibt, dass auch ein Überhitzungsschutz für das Heizelement besonders zuverlässig ermöglicht wird. Der Protektor ist typischerweise ein temperaturabhängig schaltendes Glied, das mit Erreichen einer vorgegebenen Temperatur ("Schutztemperatur") einen Stromkreis zu dem mindestens einen Heizelement unterbricht. Der Protektor kann beispielsweise ein Bimetallelement aufweisen.

Es ist nicht erfindungsgemäß, dass der Heizelement-I emperatursensor an dem Heizelement angebracht ist. So lasst sich die Helzelementtemperatur auf einem besonders hohen Niveau bestimmen. Der Heizelement-Temperatursensor kann an dem Heizelement beispielsweise aufgelötet sein, daran angeschraubt sein oder mittels eines wärmeleitfähigen Haftmittels befestigt sein.

Es ist eine Ausgestaltung, dass der Dampferzeuger unabhängig von einer Wassertemperatur des in dem Wassertank befindlichen Wassers betreibbar ist. Das Haushalts-Dampfbehandlungsgerät weist dann in einer Weiterbildung keinen in oder an dem Wassertank angebrachten Temperatursensor ("Innen-Temperatursensor") auf, der dazu vorgesehen ist, eine Wassertemperatur und/oder ein Eintreten eines Sieden des Wassers zu messen. Dies ergibt den Vorteil, dass ein Betrieb des Haushalts-Dampfbehandlungsgeräts besonders einfach und preiswert umsetzbar ist.

Es ist eine Ausgestaltung, dass während eines Betriebs des Dampferzeugers eine zumindest zeit- oder abschnittsweise konstante elektrische (Heiz-)Leistung in das mindestens eine Heizelement einprägbar ist. Die Heizleistung ist vorteilhafter Weise so hoch, dass sie das in dem Wassertank befindliche Wasser auch bei einem hohen Verkalkungsgrad sicher zum Sieden bringt. Durch eine Verkalkung wird dann lediglich der Zeitpunkt des Sieden verzögert. Je höher der Verkalkungsgrad ist, desto höher wird die an dem Heizelement (bzw. indirekt an der Abdeckung) gemessene Heizelementtemperatur sein. Die konstante elektrische Leistung kann auch durch eine getaktete Bestromung des mindestens eine Heizelements erreicht werden, wobei dann die Konstanz der Bestromung über mindestens eine Taktdauer betrachtet wird. Insbesondere kann die konstante elektrische (Heiz-)Leistung für eine Mindest-Zeitdauer zwischen t = 50 s und t = 400 s konstant gehalten werden.

Es ist eine alternative Ausgestaltung, dass das Haushalts-Dampfbehandlungsgerät zusätzlich einen Innen-Temperatursensor aufweist und die Datenverarbeitungseinrichtung zu eingerichtet ist, die Heizelementtemperatur zur Bestimmung des Verkalkungsgrad erst ab einem Zeitpunkt auszuwerten, bei dem das Wasser zum Sieden gebracht worden ist. Zur Bestimmung des Verkalkungsgrad wird in dieser Ausgestaltung also die von dem Innen-Temperatursensor gemessene Temperatur nicht mit der Heizelementtemperatur verknüpft, sondern legt lediglich einen frühesten Zeitpunkt fest, zu dem die Bestimmung des Verkalkungsgrad allein anhand der Heizelementtemperatur durchgeführt wird.

Es ist eine Ausgestaltung, dass die Datenverarbeitungseinrichtung dazu eingerichtet ist, den Verkalkungsgrad ab einem Zeitpunkt festzustellen, zu dem die Heizelementtemperatur ein Temperaturplateau erreicht. So wird der Vorteil erreichte, dass der Verkalkungsgrad dann besonders zuverlässig messbar ist, wenn sich der Dampferzeuger in einem thermisch einen geschwungenen Zustand befindet. Unter einem Temperaturplateau kann insbesondere ein Verlauf der Heizelementtemperatur verstanden werden, innerhalb dessen sich über einen vergleichsweise langen Zeitraum die Heizelementtemperatur nur geringfügig ändert, beispielsweise innerhalb eines vorgegebenen (engen) Temperaturbands befindet oder von einem Mittelwert nur geringfügig abweicht.

Es ist eine Ausgestaltung, dass die Datenverarbeitungseinrichtung dazu eingerichtet ist, den Verkalkungsgrad aus einem Temperaturunterschied zwischen einer gemessenen Heizelementtemperatur und einer Referenztemperatur für den unverkalkten Zustand des Wassertanks zu bestimmen. Beispielsweise kann der Temperaturunterschied als mit dem Verkalkungsgrad eindeutig zusammenhängend, z.B. proportional zu dem Verkalkungsgrad, angenommen werden und so der Verkalkungsgrad besonders einfach aus dem Temperaturunterschied berechnet werden. Jedoch sind auch andere mathematische Verknüpfungen oder Formeln zur Berechnung des Verkalkungsgrads aus dem Temperaturunterschied nutzbar. Der Temperaturunterschied zwischen der Heizelementtemperatur und der Referenztemperatur ist ein positiver Unterschied, d. h., dass die Heizelementtemperatur typischerweise der Referenztemperatur entspricht (z.B. unmittelbar nach einer Entkalkung) oder höher ist als die Referenztemperatur. Die Referenztemperatur kann eine fest vorgegebene Temperatur sein, die beispielsweise durch Referenzmessungen des Herstellers bestimmt worden ist und im Werk in das Haushalts-Dampfbehandlungsgerät eingespeichert worden ist. Die Referenztemperatur kann zusätzlich oder alternativ eine durch das Haushalts-Dampfbehandlungsgerät bestimmte Temperatur sein. Beispielsweise kann die Referenztemperatur durch das Haushalts-Dampfbehandlungsgerät nach einem Entkalkungsvorgang bestimmt werden.

Es ist eine Ausgestaltung, dass die Datenverarbeitungseinrichtung dazu eingerichtet ist, einen kritischen Verkalkungsgrad anhand eines Erreichens eines vorgegebenen Schwellwerts der Heizelementtemperatur zu bestimmen. Dies eröffnet die Möglichkeit, einen effektiven Betrieb des Dampferzeugers besonders zuverlässig zu erhalten. In diesem Fall nimmt der Verkalkungsgrad also nur zwei Zustände ein, nämlich "nicht kritisch verkalkt" oder "kritisch verkalkt". Unter einem "kritischen Verkalkungsgrad" kann insbesondere ein solcher Verkalkungsgrad verstanden werden, mit dessen Erreichen ein effektiver oder ein ordnungsgemäßer Betrieb des Dampferzeugers nicht mehr oder bald nicht mehr gewährleistet werden kann. Der Schwellwert kann eine absoluter Temperaturwert sein, wobei dann auf die Verwendung von Referenztemperaturen verzichtet werden kann. Alternativ oder zusätzlich kann der Schwellwert ein Wert für den Unterschied zwischen der Heizelementtemperatur und einer Referenztemperatur sein. Es ist eine Weiterbildung, dass der vorgegebene Schwellwert abhängig von einer in das mindestens eine Heizelement eingeprägten elektrischen Heizleistung ist.

Es ist eine Ausgestaltung, dass der Verkalkungsgrad in einer Anzeigeeinrichtung anzeigbar ist. So wird der Vorteil erreicht, dass einem Nutzer ein aktueller Verkalkungsgrad angezeigt werden kann und der Nutzer so besonders frühzeitig eine Entkalkung des Wassertanks einleiten kann. Die Anzeigeeinrichtung kann z.B. eine Segmentanzeige, ein Bildschirm usw. sein.

Es ist eine Ausgestaltung, dass mit Erreichen eines kritischen Verkalkungsgrad ein Hinweis an einen Nutzer ausgebbar ist. So wird eine Möglichkeit bereitgestellt, den Nutzer auf eine nun zweckmäßigerweise durchzuführende Reinigung des Wassertanks hinzuweisen. Der Hinweis kann ein textlicher Hinweis in einer Anzeigeeinrichtung, ein optischer Hinweis durch blinken einer entsprechenden Leuchte und/oder ein akustischer Hinweis sein.

Die Aufgabe wird auch gelöst durch ein Verfahren zum Betreiben eines Haushalts-Dampfbehandlungsgeräts, bei dem einen Verkalkungsgrad des Wassertanks anhand einer durch den mindestens einen Heizelement-Temperatursensor gemessenen Heizelementtemperatur festgestellt wird.

Das Verfahren kann analog zu dem Haushalts-Dampfbehandlungsgerät ausgestaltet werden und gibt die gleichen Vorteile.

So ist es eine Ausgestaltung, dass
- das mindestens eine Heizelement mit einer konstanten Heizleistung betrieben wird,
- abgewartet wird, bis die Heizelementtemperatur ein Temperaturplateau erreicht hat und
- mindestens eine in dem Temperaturplateau gemessene Heizelementtemperatur ausgewertet wird, um den Verkalkungsgrad zu bestimmen.

Es ist eine Weiterbildung, dass der Verkalkungsgrad am Ende eines Heizvorgangs des Dampfgargeräts bestimmt wird, da so auch während dieses Heizvorgangs auftretende Kalkablagerungen mitberücksichtigt werden können.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt eine Sicht auf einen Boden eines Dampferzeugers eines Haushalts-Dampfbehandlungsgeräts und
- Fig.2: zeigt Temperaturkurven einer Heizelementtemperatur für einen verkalkten Zustand und einer Heizelementtemperatur für einen unverkalkten Zustand eines Wassertanks des Dampferzeugers.

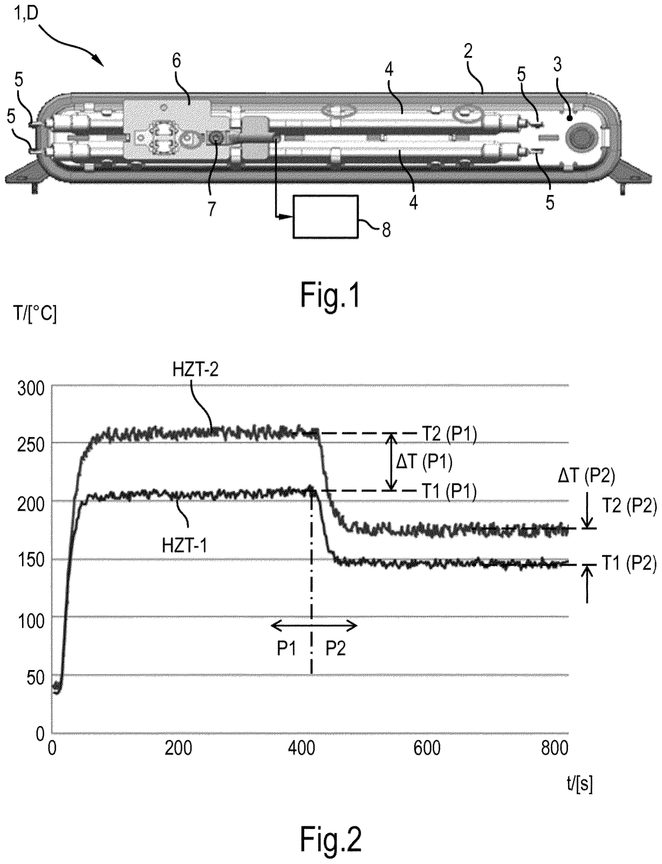

**Fig.1** zeigt eine Aufsicht auf einen Boden 3 eines Dampferzeugers 1 eines Haushalts-Dampfbehandlungsgeräts in Form z.B. eines Dampfgargeräts D. Der Dampferzeuger 1 weist einen Wassertank 2 z.B. aus Edelstahl auf, von dem hier eine Außenseite seines Bodens 3 gezeigt ist. Der Wassertank 2 kann z.B. an seiner dem Boden 3 gegenüberliegenden Oberseite offen sein oder einen Dampfauslass aufweisen und dient zur Aufnahme von zu verdampfen Wasser.

An der Außenseite des Bodens 3 sind zwei, hier: identische, längliche Heizelemente 4 parallel zueinander verlaufend angeordnet. Beispielsweise können die Heizelemente 4 an dem Boden 3 befestigt sein, beispielsweise daran angelötet sein. Die Form des Bodens 3 ist ebenfalls länglich, wobei die beiden Heizelemente 4 sich über einen Großteil der Länge des Bodens 3 erstrecken. Beide Heizelemente 4 weisen an ihren Enden jeweils elektrische Anschlüsse 5 zum Anschluss einer Strom- oder Spannungsversorgung (o. Abb.) auf. Mittels der Strom- oder Spannungsversorgung kann den Heizelementen 4 eine jeweilige Heizleistung aufgeprägt werden, die insbesondere für beide Heizelemente 4 gleich groß sein kann.

Beide Heizelemente 4 werden an ihrer dem Boden 3 des Wassertanks 2 abgewandten Seite von einer gemeinsamen metallischen Abdeckung in Form einer Aluminiumplatte 6 abgedeckt. Die Aluminiumplatte 6 überdeckt somit nebeneinanderliegende Abschnitte der Heizelemente 4. Die Aluminiumplatte 6 befindet sich in Kontakt mit beiden Heizelementen 4, beispielsweise dadurch, dass sie an beide Heizelemente 4 angelötet ist.

An einer dem Wassertank 2 abgewandten Seite der Aluminiumplatte 6 ist ein Heizelement-Temperatursensor 7 angebracht, z.B. angelötet oder angeschraubt. Der Heizelement-Temperatursensor 7 ist somit über die Aluminiumplatte 6 mit beiden Heizelementen 4 auf effektive Weise (mit einem geringen thermischen Widerstand) indirekt thermisch gekoppelt. Besonders vorteilhaft ist der Heizelement-Temperatursensor 7 auf der Aluminiumplatte 6 in der Mitte zwischen beiden Heizelementen 4 angeordnet, so dass mögliche Temperaturunterschiede der von der Aluminiumplatte 6 überdeckten Heizelemente 4 ausgeglichen werden können und die Heizelementtemperatur dadurch besonders zuverlässig bestimmbar ist.

Der Temperatursensor 7 ist mit einer Datenverarbeitungseinrichtung 8 des Dampfgargeräts D verbunden. Die Datenverarbeitungseinrichtung 8 ist dazu eingerichtet, einen Verkalkungsgrad im Inneren des Wassertanks 2 anhand einer durch den Heizelement-Temperatursensor 7 gemessenen Heizelementtemperatur (siehe auch Fig.2) festzustellen.

An der Aluminiumplatte 6 kann zusätzlich ein Protektor (o. Abb.) angebracht sein.

**Fig.2** zeigt Temperaturkurven einer Heizelementtemperatur HZT-1 für einen nicht verkalkten Zustand und einer Heizelementtemperatur HZT-2 für einen verkalkten Zustand des Wassertanks 2, aufgetragen als Werte einer Temperatur T in °C gegen eine Zeit t seit Beginn eines Verdampfungsvorgangs.

Zu Beginn des Heizvorgangs zwischen t = 0 s und ca. t = 425 s werden die beiden Heizelemente 4 gleichmäßig mit einer gemeinsamen Heizleistung P1 = 2700 Watt bestromt. Ab ca. t = 425 s wird die Heizleistung auf einen Wert P2 = 1000 W abgesenkt. Dann wird auch nur noch eines der beiden Heizelemente 4 bestromt. Jedoch sind die möglichen Heizleistungen nicht auf diese beiden Werte beschränkt.

Sowohl im verkalkten Zustand als auch im nicht verkalkten Zustand steigt die Heizelementtemperaturen HZT-1 und HZT-2 an, bis sie einen zumindest ungefähr eingeschwungenen Zustand erreicht, der auch als Temperaturplateau bezeichnet werden kann. Eine durchschnittliche Heizelementtemperatur T1 innerhalb eines Temperaturplateaus ist im unverkalkten Zustand merklich geringer als eine Heizelementtemperatur T2 im verkalkten Zustand, da durch die Kalkschicht eine Wärmedämmung erzeugt wird, welche eine Übertragung thermischer Energie von den Heizelementen 4 auf das in dem Wassertank 2 befindliche Wasser thermisch behindert. Die Höhe der Heizelementtemperatur HZT-2 = T2 im Bereich ihres Temperaturplateaus stellt also ein Maß für den Grad der Verkalkung in dem Wassertank 2 dar. Je höher die Heizelementtemperatur T2 ist, desto stärker ist die Verkalkung.

Für P1 = 2700 W beträgt die Heizelementtemperatur T1 (P1) hier ca. 205 °C, während die Heizelementtemperatur T2 (P1) bei ca. 260 °C liegt. Für P2 = 1000 W beträgt die Heizelementtemperatur T1 (P2) ca. 145 °C, während die Heizelementtemperatur T2 (P2) bei ca. 180 °C liegt.

Um die Heizelementtemperaturen T1 und T2 besonders genau auswerten zu können, kann können die Temperaturkurven geglättet werden (wie durch die gestrichelten horizontalen Linie angedeutet), beispielsweise dadurch, dass mehrere aufeinanderfolgende Temperaturmesswerte gemittelt werden, z.B. nach Art eines mitlaufenden Fensters.

In einer Weiterbildung kann die Verkalkung bzw. der Verkalkungsgrad mittels der Datenverarbeitungseinrichtung 8 durch einen Vergleich der Heizelementtemperatur T2 mit der Heizelementtemperatur T1 ermittelt werden. Insbesondere kann ein Temperaturunterschied ΔT = T2 - T1 als Maß für den Verkalkungsgrad verwendet werden, und zwar für beide Heizleistungen P1 und P2. Die Heizelementtemperatur T1 dient dann ein Referenzwert. Beispielsweise kann der Temperaturunterschied ΔT über eine mathematische Formel oder durch eine Nachschlagetabelle auf die Dicke einer Kalkschicht und damit auf den Verkalkungsgrad umgerechnet werden. Der Kurvenverlauf der Heizelementtemperatur HZT-1 oder auch nur die Heizelementtemperatur T1 am Temperaturplateau des unverkalkten Zustands kann beispielsweise ab Werk hinterlegt sein oder nach jedem Entkalkungsvorgang neu gemessen werden. Der Verkalkungsgrad kann beispielsweise auf einer Anzeigeeinrichtung (o. Abb.) des Dampfgargeräts D angezeigt werden. Es ist besonders vorteilhaft, wenn der Verkalkungsgrad am Ende eines Heizvorgangs des Dampfgargeräts D bestimmt wird, da so auch während dieses Heizvorgangs auftretende Kalkablagerungen mitberücksichtigt werden können.

In einer zusätzlichen oder alternativen Weiterbildung kann ein kritischer Verkalkungsgrad dadurch bestimmt werden, dass die Heizelementtemperatur T2 einen vorgegebenen Schwellwert erreicht oder überschreitet, der insbesondere abhängig von der in die Heizelemente 4 eingeprägten elektrischen Leistung P1, P2 ist. Auf die Verwendung der Heizelementtemperatur T1 als Referenz kann dann verzichtet werden. Jedoch kann der kritische Verkalkungsgrad auch dadurch bestimmt werden, dass der Temperaturunterschied ΔT einen vorgegebenen Schwellwert erreicht oder überschreitet, der ebenfalls insbesondere abhängig von der in die Heizelemente 4 eingeprägten elektrischen Leistung P1, P2 ist. Mit Erkennen des kritischen Verkalkungsgrad kann an dem Dampfgargerät D ein entsprechender Hinweis an einen Nutzer ausgegeben werden.

Die oben beschriebene Art, den Verkalkungsgrad zu bestimmen, weist den Vorteil auf, dass kein weiterer Temperatursensor benötigt wird, insbesondere auch kein an oder in dem Wassertank 2 angeordneter weiterer Temperatursensor (Innen-Temperatursensor). Auch auf an anderer Stelle außerhalb des Wassertanks 2 angeordnete Temperatursensoren kann verzichtet werden.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Dampferzeuger
- 2: Wassertank
- 3: Boden
- 4: Heizelement
- 5: Anschluss
- 6: Aluminiumplatte
- 7: Heizelement-Temperatursensor
- 8: Datenverarbeitungseinrichtung
- D: Dampfgargerät
- HZT: Heizelementtemperatur
- HZT-1: Heizelementtemperatur im nicht verkalkten Zustand
- HZT-2: Heizelementtemperatur im verkalkten Zustand
- P1: Heizleistung
- P2: Heizleistung
- t: Zeit
- T: Temperatur
- T1: Heizelementtemperatur HZT-1 im Bereich eines Temperaturplateaus
- T2: Heizelementtemperatur HZT-2 im Bereich eines Temperaturplateaus
- ΔT: Temperaturunterschied

## Patentansprüche

1. Haushalts-Dampfbehandlungsgerät (D), aufweisend einen Dampferzeuger (1), wobei der Dampferzeuger (1)
- einen Wassertank (2) zur Aufnahme von zu verdampfenden Wasser,
- mindestens ein außerhalb des Wassertanks (2) daran bodenseitig angeordnetes Heizelement (4), mittels dessen in dem Wassertank (2) stehendes Wasser zur Dampferzeugung erhitzbar ist, und
- einen Heizelement-Temperatursensor (7), der mit dem mindestens einen Heizelement (4) thermisch gekoppelt ist,
aufweist, wobei das Haushalts-Dampfbehandlungsgerät (D)
- eine Datenverarbeitungseinrichtung (8) aufweist, welche mit dem mindestens einen Heizelement-Temperatursensor (7) gekoppelt ist,
- die Datenverarbeitungseinrichtung (8) dazu eingerichtet ist, einen Verkalkungsgrad des Wassertanks (2) anhand einer durch den mindestens einen Heizelement-Temperatursensor (7) gemessenen Heizelementtemperatur (HZT-1, HZT-2, T1, T2) festzustellen und
- das mindestens eine Heizelement (4) an seiner dem Wassertank (2) abgewandten Seite von einer metallischen Abdeckung (6) abgedeckt ist und
- der Heizelement-Temperatursensor (7) an der metallischen Abdeckung (6) angebracht ist, so dass er über die Abdeckung (6) mit dem mindestens einen Heizelement (4) indirekt thermisch gekoppelt ist.

2. Haushalts-Dampfbehandlungsgerät (D) nach Anspruch 1, wobei der Heizelement-Temperatursensor (7) an der dem Wassertank (2) abgewandten Seite der metallischen Abdeckung (6) angebracht ist.

3. Haushalts-Dampfbehandlungsgerät (D) nach einem der vorhergehenden Ansprüche, wobei der Heizelement-Temperatursensor (7) an der metallischen Abdeckung (6) angelötet ist.

4. Haushalts-Dampfbehandlungsgerät (D) nach einem der Ansprüche 2 bis 3, wobei die Abdeckung (6) mehrere unterschiedliche Abschnitte des mindestens einen Heizelements (4) überdeckt.

5. Haushalts-Dampfbehandlungsgerät (D) nach Anspruch 4, wobei die Abdeckung (6) zwei zueinander parallele Abschnitte jeweiliger Heizelemente (4) überdeckt und der Heizelement-Temperatursensor (7) auf der Abdeckung (6) in der Mitte zwischen den beiden Abschnitten angeordnet ist.

6. Haushalts-Dampfbehandlungsgerät (D) nach einem der vorhergehenden Ansprüche, wobei die Abdeckung (6) aus einem Metall besteht, das eine höhere Wärmeleitfähigkeit aufweist als die dem mindestens einen Heizelement (6) gegenüberliegende Fläche des Bodens (3) des Wassertanks (2).

7. Haushalts-Dampfbehandlungsgerät (D) nach einem der vorhergehenden Ansprüche, wobei der Dampferzeuger (1) unabhängig von einer Wassertemperatur des in dem Wassertank (2) befindlichen Wassers betreibbar ist.

8. Haushalts-Dampfbehandlungsgerät (D) nach einem der vorhergehenden Ansprüche, wobei die Datenverarbeitungseinrichtung (8) dazu eingerichtet ist, den Verkalkungsgrad ab einem Zeitpunkt (t1, t2) festzustellen, zu dem die Heizelementtemperatur (HZT-1, HZT-2, T1, T2) ein Temperaturplateau erreicht.

9. Haushalts-Dampfbehandlungsgerät (D) nach einem der vorhergehenden Ansprüche, wobei die Datenverarbeitungseinrichtung (8) dazu eingerichtet ist, den Verkalkungsgrad aus einem Temperaturunterschied (ΔT (P1), ΔT (P2)) zwischen einer gemessenen Heizelementtemperatur (HZT-2, T2) und einer Referenztemperatur (HZT-1, T1) für den unverkalkten Zustand des Wassertanks (2) zu bestimmen.

10. Haushalts-Dampfbehandlungsgerät (D) nach einem der vorhergehenden Ansprüche, wobei die Datenverarbeitungseinrichtung (8) dazu eingerichtet ist, einen kritischen Verkalkungsgrad anhand eines Erreichens eines vorgegebenen Schwellwerts zu bestimmen.

11. Haushalts-Dampfbehandlungsgerät (D) nach einem der Ansprüche 9 bis 10, wobei das Haushalts-Dampfbehandlungsgerät (D) dazu eingerichtet ist, die Referenztemperatur (HZT-1, T1) für den unverkalkten Zustand des Wassertanks (2) nach jedem Entkalkungsvorgang neu zu bestimmen.

12. Haushalts-Dampfbehandlungsgerät (D) nach einem der Ansprüche 9 bis 11, wobei die Datenverarbeitungseinrichtung (8) dazu eingerichtet ist, den Temperaturunterschied (ΔT (P1), ΔT (P2)) in eine Dicke einer Kalkschicht umzurechnen.

13. Haushalts-Dampfbehandlungsgerät (D) nach einem der vorhergehenden Ansprüche, wobei der Verkalkungsgrad in einer Anzeigeeinrichtung anzeigbar ist.

14. Haushalts-Dampfbehandlungsgerät (D) nach einem der vorhergehenden Ansprüche, wobei mit Erreichen eines kritischen Verkalkungsgrad ein Hinweis an einen Nutzer ausgebbar ist.

15. Verfahren zum Betreiben eines Haushalts-Dampfbehandlungsgeräts (D) nach einem der vorhergehenden Ansprüche, bei dem
- das mindestens eine Heizelement (4) mit einer konstanten Heizleistung betrieben wird,
- abgewartet wird, bis die Heizelementtemperatur (HZT-1, HZT-2) ein Temperaturplateau erreicht hat und
- mindestens eine in dem Temperaturplateau gemessene Heizelementtemperatur (T1, T2) ausgewertet wird, um den Verkalkungsgrad zu bestimmen.

## Claims

1. Household steam treatment appliance (D), having a steam generator (1),
wherein the steam generator (1) has
- a water tank (2) for receiving water to be evaporated,
- at least one heating element (4) arranged on the floor outside of the water tank (2), by means of which water present in the water tank (2) can be heated for steam generation, and
- a heating element temperature sensor (7) which is thermally coupled to the at least one heating element (4),
wherein the household steam treatment appliance (D)
- has a data processing facility (8), which is coupled to the at least one heating element temperature sensor (7),
- the data processing facility (8) is designed to establish a degree of calcification of the water tank (2) using a heating element temperature (HZT-1, HZT-2, T1, T2) measured by the at least one heating element temperature sensor (7) and
- the at least one heating element (4) is covered on its side facing away from the water tank (2) by a metallic cover (6) and
- the heating element temperature sensor (7) is attached to the metallic cover (6), so that it is indirectly thermally coupled to the at least one heating element (4) via the cover (6).

2. Household steam treatment appliance (D) according to claim 1, wherein the heating element temperature sensor (7) is attached to the side of the metallic cover (6) facing away from the water tank (2).

3. Household steam treatment appliance (D) according to one of the preceding claims, wherein the heating element temperature sensor (7) is soldered to the metallic cover (6).

4. Household steam treatment appliance (D) according to one of claims 2 to 3, wherein the cover (6) covers a number of different sections of the at least one heating element (4).

5. Household steam treatment appliance (D) according to claim 4, wherein the cover (6) covers two sections of respective heating elements (4) which are parallel to one another and the heating element temperature sensor (7) on the cover (6) is arranged in the centre between the two sections.

6. Household steam treatment appliance (D) according to one of the preceding claims, wherein the cover (6) consists of a metal which has a higher thermal conductivity than the surface of the base (3) of the water tank (2) which is opposite to the at least one heating element (6).

7. Household steam treatment appliance (D) according to one of the preceding claims, wherein the steam generator (1) can be operated independently of a water temperature of the water located in the water tank (2).

8. Household steam treatment appliance (D) according to one of the preceding claims, wherein the data processing facility (8) is designed to establish the degree of calcification from a point in time (t1, t2) at which the heating element temperature (HZT-1, HZT-2, T1, T2) reaches a temperature plateau.

9. Household steam treatment appliance (D) according to one of the preceding claims, wherein the data processing facility (8) is designed to determine the degree of calcification from a temperature difference (ΔT (P1), ΔT (P2) between a measured heating element temperature (HZT-2, T2) and a reference temperature (HTZ-1, T1) for the uncalcified state of the water tank (2).

10. Household steam treatment appliance (D) according to one of the preceding claims, wherein the data processing facility (8) is designed to determine a critical degree of calcification on the basis of achieving a predetermined threshold value.

11. Household steam treatment appliance (D) according to one of claims 9 to 10, wherein the household steam treatment appliance (D) is designed to redetermine the reference temperature (HZT-1, T1) for the uncalcified state of the water tank (2) after each decalcification process.

12. Household steam treatment appliance (D) according to one of claims 9 to 11, wherein the data processing facility (8) is designed to convert the temperature difference (ΔT (P1), ΔT (P2) into a thickness of the limescale layer.

13. Household steam treatment appliance (D) according to one of the preceding claims, wherein the degree of calcification can be displayed in a display facility.

14. Household stream treatment appliance (D) according to one of the preceding claims, wherein a notification can be output to a user when a critical degree of calcification has been reached.

15. Method for operating a household steam treatment appliance (D) according to one of the preceding claims, in which
- the at least one heating element (4) is operated with a constant heat output,
- it is awaited until the heating element temperature (HZT-1, HZT-2) has reached a temperature plateau and
- at least one heating element temperature (T1, T2) measured in the temperature plateau is evaluated in order to determine the degree of calcification.

## Revendications

1. Appareil ménager de traitement à la vapeur (D), présentant un générateur de vapeur (1), dans lequel le générateur de vapeur (1) présente
- un réservoir d'eau (2) pour l'accueil d'eau à vaporiser,
- au moins un élément chauffant (4) disposé à l'extérieur du réservoir d'eau (2), côté fond, au moyen duquel l'eau se trouvant dans le réservoir d'eau (2) peut être chauffée pour produire de la vapeur, et
- un capteur de température d'élément chauffant (7) couplé thermiquement à l'au moins un élément chauffant (4), dans lequel l'appareil ménager de traitement à la vapeur (D)
- présente un dispositif de traitement de données (8) couplé à l'au moins un capteur de température d'élément chauffant (7),
- le dispositif de traitement de données (8) est aménagé pour établir un degré d'entartrage du réservoir d'eau (2) au moyen d'une température d'élément chauffant (HZT-1, HZT-2, T1, T2) mesurée par l'au moins un capteur de température d'élément chauffant (7) et
- l'au moins un élément chauffant (4) est recouvert d'un couvercle de protection métallique (6) sur son côté éloigné du réservoir d'eau (2), et
- le capteur de température d'élément chauffant (7) est apposé sur le couvercle de protection métallique (6), de sorte qu'il est indirectement couplé thermiquement à l'au moins un élément chauffant (4) via le couvercle de protection (6).

2. Appareil ménager de traitement à la vapeur (D) selon la revendication 1, dans lequel le capteur de température d'élément chauffant (7) est apposé sur le côté du couvercle de protection métallique (6) éloigné du réservoir d'eau (2).

3. Appareil ménager de traitement à la vapeur (D) selon l'une des revendications précédentes, dans lequel le capteur de température d'élément chauffant (7) est brasé sur le couvercle de protection métallique (6).

4. Appareil ménager de traitement à la vapeur (D) selon l'une des revendications 2 à 3, dans lequel le couvercle de protection (6) couvre plusieurs sections différentes de l'au moins un élément chauffant (4).

5. Appareil ménager de traitement à la vapeur (D) selon la revendication 4, dans lequel le couvercle de protection (6) couvre deux sections parallèles d'éléments chauffants respectifs (4) et le capteur de température d'élément chauffant (7) est disposé sur le couvercle de protection (6) au centre entre les deux sections.

6. Appareil ménager de traitement à la vapeur (D) selon l'une des revendications précédentes, dans lequel le couvercle de protection (6) se compose d'un métal qui présente une conductivité thermique supérieure à celle de la surface du fond (3) du réservoir d'eau (2) opposée à l'au moins un élément chauffant (6).

7. Appareil ménager de traitement à la vapeur (D) selon l'une des revendications précédentes, dans lequel le générateur de vapeur (1) peut être exploité indépendamment d'une température d'eau de l'eau se trouvant dans le réservoir d'eau (2).

8. Appareil ménager de traitement à la vapeur (D) selon l'une des revendications précédentes, dans lequel le dispositif de traitement de données (8) est aménagé pour établir le degré d'entartrage à partir d'un instant (t1, t2) auquel la température d'élément chauffant (HZT-1, HZT-2, T1, T2) atteint un plateau de température.

9. Appareil ménager de traitement à la vapeur (D) selon l'une des revendications précédentes, dans lequel le dispositif de traitement de données (8) est aménagé pour établir le degré d'entartrage au départ d'une différence de température (ΔT (P1), ΔT (P2)) entre une température d'élément chauffant mesurée (HZT-2, T2) et une température de référence (HZT-1, T1) pour l'état non entartré du réservoir d'eau (2).

10. Appareil ménager de traitement à la vapeur (D) selon l'une des revendications précédentes, dans lequel le dispositif de traitement de données (8) est aménagé pour établir un degré d'entartrage critique au moyen d'une atteinte d'une valeur seuil prédéfinie.

11. Appareil ménager de traitement à la vapeur (D) selon l'une des revendications 9 à 10, dans lequel l'appareil ménager de traitement à la vapeur (D) est aménagé pour établir à nouveau la température de référence (HZT-1, T1) pour l'état non entartré du réservoir d'eau (2) après chaque processus de détartrage.

12. Appareil ménager de traitement à la vapeur (D) selon l'une des revendications 9 à 11, dans lequel le dispositif de traitement de données (8) est aménagé pour convertir la différence de température (ΔT (P1), ΔT (P2)) en une épaisseur d'une couche de tartre.

13. Appareil ménager de traitement à la vapeur (D) selon l'une des revendications précédentes, dans lequel le degré d'entartrage est affichable dans un dispositif d'affichage.

14. Appareil ménager de traitement à la vapeur (D) selon l'une des revendications précédentes, dans lequel à l'atteinte d'un degré d'entartrage critique, une indication peut être émise à destination d'un utilisateur.

15. Procédé d'exploitation d'un appareil ménager de traitement à la vapeur (D) selon l'une des revendications précédentes, dans lequel
- on exploite l'au moins un élément chauffant (4) est exploité selon une puissance de chauffage constante,
- on attend l'atteinte d'un plateau de température par la température d'élément chauffant (HZT-1, HZT-2) est attendue
- on évalue au moins une température d'élément chauffant (T1, T2) mesurée dans le plateau de température est évaluée pour établir le degré d'entartrage.
